# EUROPÄISCHE PATENTSCHRIFT

(11) **EP 2 871 116 B1**
(45) Veröffentlichungstag und Bekanntmachung des Hinweises auf die Patenterteilung: **05.10.2016**
(21) Anmeldenummer: 14401108.7
(22) Anmeldetag: 05.11.2014
(51) Int. Cl.: B62D 27/06

(54) **Formteil für Kraftfahrzeuge**
Molding for motor vehicles
Pièce de formage pour véhicules automobiles

(30) Priorität: 11.11.2013 DE 102013112358
(43) Veröffentlichungstag der Anmeldung: 13.05.2015
(73) Patentinhaber: GEDIA Gebrüder Dingerkus GmbH, 57439 Attendorn (DE)
(72) Erfinder: Kinkelbur, Thomas, 44265 Dortmund (DE); Foidl, Markus, 57413 Finnentrop (DE); Schönewald, Nadine, 57439 Attendorn (DE); Strautz, Josef, 57439 Attendorn (DE)
(74) Vertreter: Köchling, Conrad-Joachim

(56) Entgegenhaltungen:
- EP-A1- 0 708 014

## Beschreibung

Verfahren zur Herstellung einer Montageeinheit aus einem Formteil und einer Verstärkungsplatte sowie eine nach dem Verfahren hergestellte Montageeinheit

Die Erfindung betrifft ein Verfahren zur Herstellung einer Montageeinheit, bestehend aus einem Formteil aus Metall, insbesondere Stahl, für Kraftfahrzeuge mit einer Durchgangslochung für Befestigungsmittel und einer die Durchgangslochung überdeckenden, gelochten Verstärkungsplatte aus Metall, insbesondere Stahl, die an dem Formteil befestigt wird, wobei die aus dem Formteil und der Verstärkungsplatte bestehende Montageeinheit mit einer Korrosionsschicht überzogen wird

Im Stand der Technik ist bekannt, dass Formteile aus Metall, insbesondere Stahl, in Bereichen, in denen sie mit anderen Formteilen oder Karosseriebauteilen verbunden werden, durch Platten oder Bleche aus Metall, insbesondere Stahl, verstärkt werden. Eine Verstärkung an den Verbindungsstellen zwischen dem Formteil und anderen Formteilen oder Karosseriebauteilen ist notwendig, da die Teile an diesen Verbindungsstellen Lochungen aufweisen, um sie durch Verschrauben oder Vernieten miteinander zu verbinden, wobei diese Verbindungsstellen durch die Lochungen eine Schwachstelle aufweisen. Die Schwachstelle wird durch das Aufbringen von Blechen oder Platten verstärkt. Solche Verstärkungsbleche oder -platten werden an deren Randkanten umlaufend mit dem Formteil verbunden, beispielsweise verlötet oder verschweißt.

Um einen dauerhaften Korrosionsschutz zu bieten, werden die Formteile mit einer Korrosionsschutzschicht überzogen, wobei die zur Verstärkung dienenden Bleche oder Platten bereits an dem Formteil fixiert sind. Die Korrosionsschutzbeschichtung erfolgt regelmäßig durch KTL-Beschichtung im Wege der kathodischen Tauchlackierung.

Aus der EP 0 708 014 A1 ist eine entsprechende Montageeinheit bekannt. Hierbei wird ein Formteil durch ein Verstärkungsblech verstärkt, welches zu wesentlichen Teilen seiner Oberfläche an Flächenbereichen des Formteiles anliegt, sodass bei einer anschließenden Korrosionsbeschichtung die Flächen zwischen den beiden Teilen nicht vom Korrosionsschutzmittel erreicht werden können, also unbeschichtet bleiben.

Der wesentliche Nachteil bei den beschriebenen Maßnahmen zur Verstärkung der Formteile ist darin zu sehen, dass beim Beschichten der Formteile samt Verstärkungsbleche oder -platten, der Korrosionsschutz nicht zwischen das Formteil und die Verstärkungsbleche oder -platten gelangen kann. Dadurch bleiben die Flächen zwischen dem Formteil und dem Blech oder der Platte frei von Korrosionsschutz. Mit der Zeit kann Feuchtigkeit durch kleinste Risse in diesen Bereich eindringen, und es kommt zu einer Korrosion an den Kontaktflächen der Teile.

Ausgehend von diesem Stand der Technik liegt der Erfindung die Aufgabe zugrunde, ein Verfahren angegebener Art zu schaffen, mit dem ein verbesserter Korrosionsschutz erreicht wird.

Zur Lösung dieser Aufgabe schlägt die Erfindung vor, die Verstärkungsplatte in einer Vormontagelage in einem Spaltabstand zu dem Formteil angeordnet wird und nur in mindestens einem Teilbereich mit dem Formteil verbunden wird und dass die Korrosionsschutzschicht auf die in Vormontagelage befindliche Montageeinheit aufgebracht wird, wobei die Verstärkungsplatte in der Montagesolllage dicht an das Formteil angezogen wird.

Dadurch ergibt sich der Vorteil, dass ein Korrosionsschutzmittel, das auf das Formteil und das daran fixierte Verstärkungsblech aufgetragen wird, auch in den Spalt zwischen dem Formteil und der Verstärkungsplatte eindringen kann, sodass die in Montagesolllage aneinander liegenden Flächen des Formteils und der Verstärkungsplatte mit dem Korrosionsschutz beschichtet sind und sich keine korrosiven Stellen bilden können. In Montagesolllage sind die Teile durch eine die Lochung durchsetzende Schraube gegeneinander angezogen.

Durch die Verbindung mindesten eines Teilbereiches der Verstärkungsplatte mit dem Formteil wird die Verstärkungsplatte in der Vormontagelage verliersicher an dem Formteil gehalten. Vorteilhaft ist auch, dass ein wesentlich geringerer Aufwand für die Fixierung der Verstärkungsplatte an dem Formteil entsteht, da das Verstärkungsblech nicht mehr umlaufend im Randbereich gelötet oder geschweißt werden muss, sondern nur in dem Teilbereich.

Bei der Endmontage wird z.B. ein anderes Formteil oder Karosseriebauteil an das Formteil angeschraubt, wobei die einzelnen Teile durch die Verschraubung aneinander gezogen werden und die Verstärkungsplatte in Montagesolllage dicht an dem Formteil anliegt. Durch diese Maßnahmen können die Kontaktflächen zwischen dem Formteil und der Verstärkungsplatte auch durch durch kleinste Spalte eintretende Flüssigkeit nicht korrodieren.

Während der Verschraubung des Formteils mit einem anderen Formteil oder Karosseriebauteil wirken Umfangskräfte über das Befestigungsmittel, z.B. die Schraube, auf die einzelnen Bauteile. Durch die Verbindung mindestens eines Teilbereiches der Verstärkungsplatte mit dem Formteil kann diese sich nicht mit der Drehrichtung des Verbindungsmittels mitdrehen und bleibt in der vorgesehenen Position.

Vorzugsweise ist vorgesehen, dass die Verstärkungsplatte mindestens eine im randnahen Bereich der Verstärkungsplatte angeordnete und in Richtung des Formteils abgewinkelte Lasche als Teilbereich aufweist, die mit dem Formteil verbunden wird.

Die in Richtung des Formteils abgewinkelte und mit diesem verbundene Lasche fixiert die Verstärkungsplatte an dem Formteil in einem Abstand zu dem Formteil, sodass in der Vormontagelage ein Spaltabstand zwischen dem Formteil und der Verstärkungsplatte besteht, in den Korrosionsschutzmittel eindringt. Bei der Endmontage können andere Formteile oder Karosseriebauteile an dem Formteil angebracht werden, beispielsweise durch Verschrauben, wobei das andere Formteil oder Karosseriebauteil die Verstärkungsplatte an das Formteil drückt. Dabei bietet die Lasche keinen großen Widerstand und verformt sich sehr leicht, sodass die Verstärkungsplatte durch die Verformung der Lasche zwischen dem Formteil und einem anderen Formteil oder Karosseriebauteil eine ebene Anlagefläche bildet und eine optimale Verbindung aller Komponenten miteinander ermöglicht.

Es ist vorzugsweise vorgesehen, dass an der Verstärkungsplatte an zwei sich gegenüberliegenden Randkanten jeweils mindestens eine in Richtung des Formteils abgewinkelte Lasche als Teilbereich angebracht wird.

Dadurch ist ein sicherer Halt der Verstärkungsplatte an dem Formteil gewährleistet. Insbesondere bei der Endmontage, wenn weitere Formteile oder Karosseriebauteile mit dem Formteil verschraubt werden, wirken Umfangskräfte über das Befestigungsmittels auf die einzelnen Bauteile. Durch die Verbindung der Verstärkungsplatte über Laschen an zwei sich gegenüberliegenden Randkanten, kann diese sich nicht mit der Drehrichtung des Verbindungsmittels mitdrehen und ist somit verdrehfest und sicher an dem Formteil gehalten.

Bevorzugt ist zudem vorgesehen, dass das Formteil im Wesentlichen mehreckig oder rund geformt wird.

Auch ist vorzugsweise vorgesehen, dass die Verstärkungsplatte und das Formteil in dem mindestens einen Teilbereich durch Fügen miteinander verbunden werden, wobei besonders bevorzugt vorgesehen ist, dass die Verstärkungsplatte und das Formteil in dem mindestens einen Teilbereich miteinander verlötet, verschweißt oder verklebt werden.

Das Formteil und die Verstärkungsplatte werden durch ein Fügeverfahren miteinander verbunden, wobei sie bevorzugt verlötet oder verschweißt werden, um eine kostengünstige und zugleich stabile Fixierung zu gewährleisten. Es sind aber auch andere Fügeverfahren zur Verbindung der Teile anwendbar.

Gegenstand der Erfindung ist ferner eine Montageeinheit gemäß Oberbegriff des Anspruches 7, die nach dem Verfahren nach einem der Ansprüche 1 bis 6 hergestellt ist, wobei diese Montageeinheit entsprechend dem Kennzeichenteil des Anspruches 7 ausgestaltet ist.

Bevorzugte Weiterbildungen dieser Montageeinheit sind in den Ansprüchen 8 bis 12 angegeben.

Ein Ausführungsbeispiel eines erfindungsgemäßen Formteils für Kraftfahrzeuge ist in der Zeichnung dargestellt und im Folgenden näher beschrieben.

Es zeigt:
- Fig. 1: ein Formteil mit einer Verstärkungsplatte in Draufsicht;
- Fig. 2: das Formteil mit der Verstärkungsplatte in Schrägansicht;
- Fig. 3: desgleichen in Seitenansicht, teilweise geschnitten.

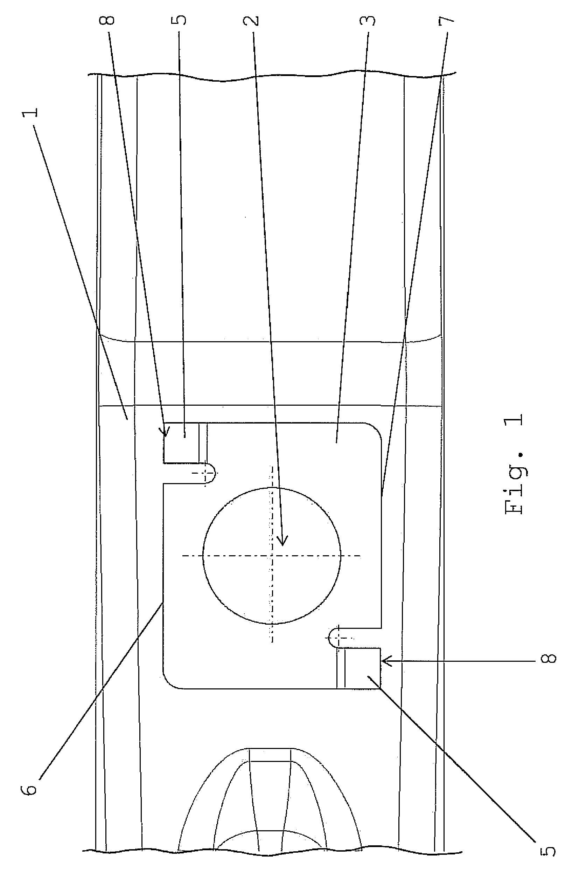

**Fig. 1** zeigt ein Formteil 1 für Kraftfahrzeuge, mit einer Durchgangslochung 2 für Befestigungsmittel und einer die Durchgangslochung 2 überdeckenden, gelochten Verstärkungsplatte 3, die an dem Formteil 1 befestigt ist. Die Verstärkungsplatte 3 in diesem Ausführungsbeispiel weist eine im Wesentlichen rechteckige Form auf, wobei auch Verstärkungsplatten 3 anderer Formen verwendbar sind. Das Formteil 1 kann ein Karosseriebauteil oder ein Rahmenteil sein. Alle Teile bestehen aus Metall, vorzugsweise Stahl.

An dem Formteil 1 können andere Formteile oder Karosseriebauteile fixiert werden, die in den Figuren nicht dargestellt sind, wobei die Durchgangslochung 2 zur Durchführung von zur Fixierung geeigneten Befestigungsmitteln, insbesondere Schrauben, vorgesehen ist.

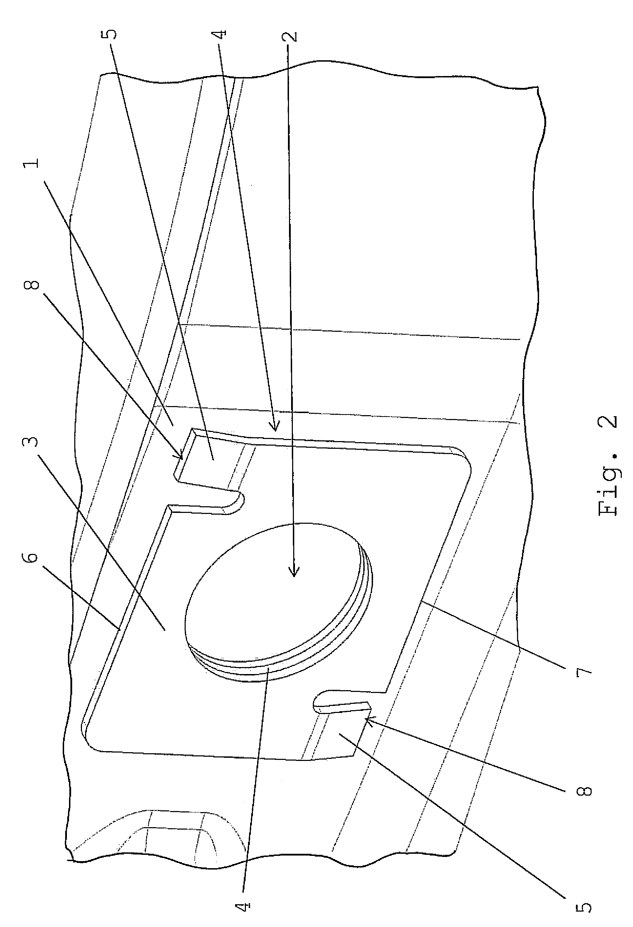

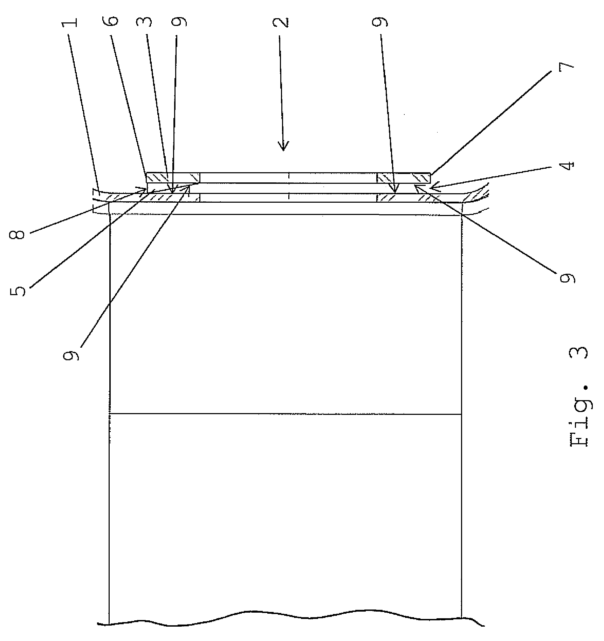

Die Verstärkungsplatte 3 weist zwei Teilbereiche zu ihrer Fixierung am Formteil 1 in Form von zwei Laschen 5 auf, die, wie insbesondere in **Fig. 2** **und** **3** gezeigt, in Richtung zum Formteil 1 abgewinkelt sind und die Verstärkungsplatte 3 in einem Spaltabstand 4 zu dem Formteil 1 in einer Vormontagelage an dem Formteil 1 fixieren. Die Laschen 5 sind an zwei sich gegenüberliegenden Randkanten 6,7 der Verstärkungsplatte 3 angeordnet, wobei deren Enden 8 mit dem Formteil 1 fügeverbunden sind, beispielsweise verschweißt oder verlötet sind. Dies ist vorteilhaft, da während der Verschraubung Umfangskräfte über das Befestigungsmittels auf die einzelnen Bauteile wirken und durch die Fixierung der Verstärkungsplatte 3 über die sich gegenüberliegend angeordneten Laschen 5 ein Verdrehen der Verstärkungsplatte 3 mit der Drehrichtung des Verbindungsmittels unterbunden ist.

Die Verbindung zwischen dem Formteil 1 und der Verstärkungsplatte 3 ist durch eine Schweiß- oder Lötverbindung im Bereich der Enden 8 der Laschen 5 hergestellt. Es sind aber auch andere Verbindungstechniken möglich.

Insbesondere **Fig. 3** zeigt, dass die Verstärkungsplatte 3 in einem Spaltabstand 4 zu dem Formteil 1 angeordnet ist. Die Verstärkungsplatte 3 ist durch die in Richtung des Formteils 1 abgewinkelten Laschen 5 in einem Spaltabstand 4 zu dem Formteil 1 gehalten. Bei der Beschichtung mit einem Korrosionsschutzmittel, gelangt das Korrosionsschutzmittel auch durch den Spaltabstand 4 zwischen das Formteil 1 und die Verstärkungsplatte 3, sodass auch die Kontaktflächen 9 der beiden Teile, die in Montagesolllage aneinander gepresst werden, mit einer Korrosionsschutzschicht überzogen sind.

Die Erfindung ist nicht auf das Ausführungsbeispiel beschränkt, sondern im Rahmen der Offenbarung vielfach variabel.

## Patentansprüche

1. Verfahren zur Herstellung einer Montageeinheit bestehend aus einem Formteil (1) aus Metall, insbesondere Stahl, für Kraftfahrzeuge mit einer Durchgangslochung (2) für Befestigungsmittel und einer die Durchgangslochung (2) überdeckenden, gelochten Verstärkungsplatte (3) aus Metall, insbesondere Stahl, die an dem Formteil (1) befestigt wird, wobei die aus dem Formteil (1) und der Verstärkungsplatte (3) bestehende Montageeinheit mit einer Korrosionsschicht überzogen wird, **dadurch gekennzeichnet, dass** die Verstärkungsplatte (3) in einer Vormontagelage in einem Spaltabstand (4) zu dem Formteil (1) angeordnet wird und nur in mindestens einem Teilbereich mit dem Formteil (1) verbunden wird und dass die Korrosionsschutzschicht auf die in Vormontagelage befindliche Montageeinheit aufgebracht wird, wobei die Verstärkungsplatte (3) in der Montagesolllage dicht an das Formteil (1) angezogen wird.

2. Verfahren nach Anspruch 1, **dadurch gekennzeichnet, dass** die Verstärkungsplatte (3) mindestens eine im randnahen Bereich der Verstärkungsplatte (3) angeordnete und in Richtung zum Formteil (1) abgewinkelte Lasche (5) als Teilbereich aufweist, die mit dem Formteil (1) verbunden wird.

3. Verfahren nach Anspruch 1 oder 2, **dadurch gekennzeichnet, dass** an der Verstärkungsplatte (3) an zwei sich gegenüberliegenden Randkanten (6,7) jeweils mindestens eine in Richtung des Formteils (1) abgewinkelte Lasche (5) als Teilbereich angebracht wird.

4. Verfahren nach einem der Ansprüche 1 bis 3, **dadurch gekennzeichnet, dass** das Formteil (1) im Wesentlichen mehreckig oder rund geformt wird.

5. Verfahren nach einem der Ansprüche 1 bis 4, **dadurch gekennzeichnet, dass** die Verstärkungsplatte (3) und das Formteil (1) in dem mindestens einen Teilbereich miteinander fügeverbunden werden.

6. Verfahren nach einem der Ansprüche 1 bis 5, **dadurch gekennzeichnet, dass** die Verstärkungsplatte (3) und das Formteil (1) in dem mindestens einen Teilbereich miteinander verlötet, verschweißt oder verklebt werden.

7. Montageeinheit, bestehend aus einem Formteil (1) aus Metall, insbesondere Stahl, für Kraftfahrzeuge mit einer Durchgangslochung (2) für Befestigungsmittel und einer die Durchgangslochung (2) überdeckenden, gelochten Verstärkungsplatte (3) aus Metall, insbesondere Stahl, die an dem Formteil (1) befestigt ist, wobei die aus dem Formteil (1) und der Verstärkungsplatte (3) bestehende Montageeinheit mit einer Korrosionsschicht überzogen ist, hergestellt nach dem Verfahren gemäß einem der Ansprüche 1 bis 6, **dadurch gekennzeichnet, dass** die Verstärkungsplatte (3) in einer Vormontagelage in einem Spaltabstand (4) zu dem Formteil (1) angeordnet ist und nur in mindestens einem Teilbereich mit dem Formteil (1) verbunden ist und dass die Korrosionsschutzschicht auf die in Vormontagelage befindliche Montageeinheit aufgebracht ist, wobei die Verstärkungsplatte (3) in der Montagesolllage dicht an dem Formteil (1) anliegt.

8. Montageeinheit nach Anspruch 7, **dadurch gekennzeichnet, dass** die Verstärkungsplatte (3) mindestens eine im randnahen Bereich der Verstärkungsplatte (3) angeordnete und in Richtung zum Formteil (1) abgewinkelte Lasche (5) als Teilbereich aufweist, die mit dem Formteil (1) verbunden ist.

9. Montageeinheit nach Anspruch 7 oder 8, **dadurch gekennzeichnet, dass** die Verstärkungsplatte (3) an zwei sich gegenüberliegenden Randkanten (6,7) jeweils mindestens eine in Richtung des Formteils (1) abgewinkelte Lasche (5) als Teilbereich aufweist.

10. Montageeinheit nach einem der Ansprüche 7 bis 9, **dadurch gekennzeichnet, dass** das Formteil (1) eine im Wesentlichen mehreckige oder runde Form aufweist.

11. Montageeinheit nach einem der Ansprüche 7 bis 10, **dadurch gekennzeichnet, dass** die Verstärkungsplatte (3) und das Formteil (1) in dem mindestens einen Teilbereich miteinander fügeverbunden sind.

12. Formteil nach einem der Ansprüche 7 bis 11, **dadurch gekennzeichnet, dass** die Verstärkungsplatte (3) und das Formteil (1) in dem mindestens einen Teilbereich miteinander verlötet, verschweißt oder verklebt sind.

## Claims

1. A method of making a mounting unit consisting of a shaped part (1) of metal, in particular steel, for motor vehicles, having a through-hole (2) for fastening parts and a perforated reinforcing plate (3) of metal overlying the through-hole (2), in particular of steel, said reinforcing plate (3) being fastened to the shaped part (1), the mounting unit consisting of the shaped part (1) and the reinforcing plate (3) being coated with a corrosion protective layer, **characterized by** that the reinforcing plate (3), in a pre-mounting position, is arranged at a gap distance (4) to the shaped part (1) and is connected in at least one partial section only to the shaped part (1), and that the corrosion protective layer is applied to the mounting unit being in the pre-mounting position, the reinforcing plate (3), in the intended mounting position, being pulled tightly against the shaped part (1).

2. The method according to claim 1, **characterized by** that the reinforcing plate (3) comprises at least one tab (5) as a partial section, said tab (5) being arranged in a section close to the edge of the reinforcing plate (3), being angled in the direction toward the shaped part (1), and being connected to the shaped part (1).

3. The method according to claim 1 or 2, **characterized by** that at the reinforcing plate (3) at two opposite edges (6, 7), at least one tab (5) each is disposed as a partial section, said tab (5) being angled in the direction of the shaped part (1).

4. The method according to one of claims 1 to 3, **characterized by** that the shaped part (1) has a substantially polygonal or round shape.

5. The method according to one of claims 1 to 4, **characterized by** that the reinforcing plate (3) and the shaped part (1) are joined to each other in the at least one partial section.

6. The method according to one of claims 1 to 5, **characterized by** that the reinforcing plate (3) and the shaped part (1) are soldered, welded, or glued to each other in the at least one partial section.

7. A mounting unit, consisting of a shaped part (1) of metal, in particular steel, for motor vehicles having a through-hole (2) for fastening parts and a perforated reinforcing plate (3) of metal overlying the through-hole (2), in particular of steel, said reinforcing plate (3) being fastened to the shaped part (1), the mounting unit consisting of the shaped part (1) and the reinforcing plate (3) being coated with a corrosion protective layer, made according to the method of one of claims 1 to 6, **characterized by** that the reinforcing plate (3), in a pre-mounting position, is arranged at a gap distance (4) to the shaped part (1) and is connected in at least one partial section only to the shaped part (1), and that the corrosion protective layer is applied to the mounting unit being in the pre-mounting position, the reinforcing plate (3), in the intended mounting position, being pulled tightly against the shaped part (1).

8. The mounting unit according to claim 7, **characterized by** that the reinforcing plate (3) comprises at least one tab (5) as a partial section, said tab (5) being arranged in a section close to the edge of the reinforcing plate (3), being angled in the direction toward the shaped part (1), and being connected to the shaped part (1).

9. The mounting unit according to claim 7 or 8, **characterized by** that the reinforcing plate (3) comprises at two opposite edges (6, 7) at least one tab (5) each as a partial section, said tab (5) being angled in the direction of the shaped part (1).

10. The mounting unit according to one of claims 7 to 9, **characterized by** that the shaped part (1) has a substantially polygonal or round shape.

11. The mounting unit according to one of claims 7 to 10, **characterized by** that the reinforcing plate (3) and the shaped part (1) are joined to each other in the at least one partial section.

12. A shaped part according to one of claims 7 to 11, **characterized by** that the reinforcing plate (3) and the shaped part (1) are soldered, welded, or glued to each other in the at least one partial section.

## Revendications

1. Procédé de fabrication d'une unité de montage consistant en une pièce de formage (1) en métal, en particulier acier, pour véhicules automobiles, comportant un trou de passage (2) pour des moyens de fixation et une plaque de renfort (3) perforée en métal, en particulier acier, recouvrant le trou de passage (2), cette plaque de renfort (3) étant fixée à la pièce de formage (1), l'unité de montage consistant en la pièce de formage (1) et la plaque de renfort (3) étant recouverte d'un revêtement anticorrosion, **caractérisé en ce que** la plaque de renfort (3), dans une position de pré-montage, est arrangée à une distance d'entrefer (4) de la pièce de formage (1) et est liée dans au moins une section partielle seulement à la pièce de formage (1), et que le revêtement anticorrosion est appliqué à l'unité de montage étant dans la position de pré-montage, la plaque de renfort (3), dans la position de montage de consigne, étant tirée de façon étanche contre la pièce de formage (1).

2. Procédé selon la revendication 1, **caractérisé en ce que** la plaque de renfort (3) comprend au moins une languette (5) comme section partielle, cette languette (5) étant arrangée dans une zone près du bord de la plaque de renfort (3), étant coudée dans la direction vers la pièce de formage (1), et étant liée à la pièce de formage (1).

3. Procédé selon la revendication 1 ou 2, **caractérisé en ce qu'**à la plaque de renfort (3) à deux bords (6, 7) opposés, au moins une languette (5) chacune est arrangée comme section partielle, cette languette (5) étant coudée dans la direction de la pièce de formage (1).

4. Procédé selon une des revendications 1 à 3, **caractérisé en ce que** la pièce de formage (1) a une forme essentiellement polygonale ou ronde.

5. Procédé selon une des revendications 1 à 4, **caractérisé en ce que** la plaque de renfort (3) et la pièce de formage (1) sont reliées l'une à l'autre dans l'au moins une section partielle.

6. Procédé selon une des revendications 1 à 5, **caractérisé en ce que** la plaque de renfort (3) et la pièce de formage (1) sont brasées, soudées ou collées l'une à l'autre dans l'au moins une section partielle.

7. Unité de montage, consistant en une pièce de formage (1) en métal, en particulier acier, pour véhicules automobiles, comportant un trou de passage (2) pour des moyens de fixation et une plaque de renfort (3) perforée en métal recouvrant le trou de passage (2), en particulier acier, cette plaque de renfort (3) étant fixée à la pièce de formage (1), l'unité de montage consistant en la pièce de formage (1) et la plaque de renfort (3) étant recouverte d'un revêtement anticorrosion, fabriquée selon le procédé des revendications 1 à 6, **caractérisée en ce que** la plaque de renfort (3), dans une position de pré-montage, est arrangée à une distance d'entrefer (4) de la pièce de formage (1) et est liée dans au moins une section partielle seulement à la pièce de formage (1), et que le revêtement anticorrosion est appliqué à l'unité de montage étant dans la position de pré-montage, la plaque de renfort (3), dans la position de montage de consigne, étant tirée de façon étanche contre la pièce de formage (1).

8. Unité de montage selon la revendication 7, **caractérisée en ce que** la plaque de renfort (3) comprend au moins une languette (5) comme section partielle, cette languette (5) étant arrangée dans une zone près du bord de la plaque de renfort (3), étant coudée dans la direction vers la pièce de formage (1), et étant liée à la pièce de formage (1).

9. Unité de montage selon la revendication 7 ou 8, **caractérisée en ce que** la plaque de renfort (3) comprend à deux bords (6, 7) opposés au moins une languette (5) chacune comme section partielle, cette languette (5) étant coudée dans la direction de la pièce de formage (1).

10. Unité de montage selon une des revendications 7 à 9, **caractérisée en ce que** la pièce de formage (1) a une forme essentiellement polygonale ou ronde.

11. Unité de montage selon une des revendications 7 à 10, **caractérisée en ce que** la plaque de renfort (3) et la pièce de formage (1) sont reliées l'une à l'autre dans l'au moins une section partielle.

12. Pièce de formage selon une des revendications 7 à 11, **caractérisée en ce que** la plaque de renfort (3) et la pièce de formage (1) sont brasées, soudées ou collées l'une à l'autre dans l'au moins une section partielle.
